# EUROPÄISCHE PATENTANMELDUNG

(11) **EP 2 431 221 A1**
(43) Veröffentlichungstag der Anmeldung: **21.03.2012**
(21) Anmeldenummer: 10177894.2
(22) Anmeldetag: 21.09.2010
(51) Int. Cl.: B60N 2/68, B61D 33/00

(54) **Passagiersitz für ein Fahrzeug**

(71) Anmelder: Siemens AG Österreich, 1210 Wien (AT)
(72) Erfinder: Brabec, Johann, 1160 Wien (AT); Gschwantner, Antony, 2521 Trumau (AT); Tiefenböck, Manfred, 1130 Wien (AT)
(74) Vertreter: Maier, Daniel Oliver

(57) **Zusammenfassung**

Passagiersitz für ein Fahrzeug, umfassend ein einstückiges, geschlossenes Sitzprofil (1) mit innenliegenden längs verlaufenden Stegen (2) wobei eine Außenfläche des Profils als Sitzfläche ausgebildet ist und mindestens eine Sitzfläche je Passagiersitz vorgesehen ist.

## Beschreibung

Passagiersitz für ein Fahrzeug

### Technisches Gebiet

Die Erfindung betrifft einen Passagiersitz für ein Fahrzeug, insbesondere für ein Schienenfahrzeug.

### Stand der Technik

Passagiersitze, insbesondere solche für Schienenfahrzeuge müssen eine Vielzahl von Anforderungen erfüllen. Neben einem dem jeweiligen Fahrzeugtyp (Fernreiseverkehr-, Regionalverkehr-, Nahverkehrfahrzeug) angepassten Sitzkomfort sind insbesondere die Brandbeständigkeit bzw. das Brandverhalten der eingesetzten Materialien von großer Bedeutung. Weiters müssen Passagiersitze eine ausreichende Festigkeit für alle erdenklichen Belastungen, inklusive Unfallbelastungen aufweisen und vandalismusresistent sein. Im Nahverkehr und im Besonderen in U-Bahnen und Straßenbahnen kann der Sitzkomfort zugunsten einer hohen Sitzplatzdichte und Festigkeit sowie Vandalismusresistenz verringert werden. Während sich in Fernreisefahrzeugen bereits großteils Einzelsitze durchgesetzt haben, erfordert das Innenlayout von Nahverkehrsfahrzeugen eine Vielzahl unterschiedlicher Sitzmöbel. Beispielsweise sind in U-Bahnfahrzeugen sowohl Einzelsitze, Doppel- und Dreiersitze als auch längere Sitzbänke erforderlich. Diese Sitzmöbel werden je nach Innenlayout längs oder quer zur Fahrzeugachse vorgesehen. Dabei ist jede Ausführungsform (Sitzanzahl und Befestigungsart) eines Sitzmöbels jeweils getrennt zu konstruieren, die Festigkeit zu berechnen und zu bauen, wobei oft auf eine möglichst hohe Anzahl an identischen Teilen geachtet wird um die Herstellungskosten möglichst gering zu halten. Weitere Forderungen nach einer Steigerung der Herstellungseffizienz sind jedoch mit den gebräuchlichen Sitzmöbelkonstruktionen nicht erzielbar.

### Darstellung der Erfindung

Der Erfindung liegt daher die Aufgabe zugrunde, einen Passagiersitz für ein Fahrzeug anzugeben, welcher leicht, kostengünstig und flexibel auf unterschiedliche Innenraumlayouts des Fahrzeugs anpassbar ist und dabei äußerst kostengünstig konstruier- und herstellbar ist.

Dem Grundgedanken der Erfindung nach wird ein Passagiersitz für ein Fahrzeug aufgebaut, welcher ein einstückiges, geschlossenes Profil mit innenliegenden längs verlaufenden Stegen umfasst, wobei eine Außenfläche des Profils als Sitzfläche ausgebildet ist und mindestens eine Sitzfläche vorgesehen ist.

Dadurch gelingt es einen Sitz, bzw. ein Sitzsystem aufzubauen, welches sehr einfach auf unterschiedlichste Einbausituationen und Innenraumlayouts angepasst werden kann. Insbesondere ist durch die Verwendung eines Profils als sowohl tragendes Element als auch gleichzeitig als Sitzfläche ein modulares Sitzsystem erstellbar, mittels welchem praktisch alle Anforderungen an Sitze in Verkehrsmitteln, ganz besonders aber U-Bahnen erfüllt werden.

Ein erfindungsgemäßer Sitz, bzw. Sitzsystem ist unter Beibehaltung eines einzigen Profils auf alle Einbauvarianten anpassbar. Die Einbaurichtung (Längsbestuhlung oder Querbestuhlung) oder die Sitzplatzanzahl auf einem Profilstück können frei gewählt werden. Dadurch ist eine außerordentliche Einsparung an Konstruktions-, Fertigungs-und Montagekosten erzielbar.

Ein wesentlicher Vorteil der Erfindung ist die einfache Fortbildung der Erfindung in Anwendungsfällen in welchen ein höherer Sitzkomfort gefordert ist. Dabei kann ein erfindungsgemäßer Sitz mit einer Sitzlehne ausgestattet werden, wobei ein Lehnenprofil an dem Sitzprofil befestigt wird. Dabei ist es besonders vorteilhaft, das Lehnenprofil und das Sitzprofil mit einer Außenform auszustatten, welche eine formschlüssige Verbindung des Lehnenprofils mit dem Sitzprofil ermöglicht. Beispielsweise kann das Sitzprofil mit einer im Wesentlichen T-förmigen Nut ausgestattet sein und das Lehnenprofil eine an diese T-förmige Nut angepasste Ausformung aufweisen, sodass die beiden Profile ineinander schiebbar sind. Somit kann eine stabile Verbindung des Lehnenprofils mit dem Sitzprofil erzielt werden. Ein Sitzprofil mit einer für die Anbindung eines Lehnenprofils ausgebildeten Nut kann auch als Sitzprofil für einen Sitz ohne Lehne verwendet werden. Dabei empfiehlt es sich, die Nut geeignet, beispielsweise mit einem Kunststoffteil abzudecken.

Eine weitere Ausführungsform der Erfindung sieht vor, das Sitzprofil mit einer Hohlkammer auszustatten, welche bei Verwendung des Sitzprofils zusammen mit einem Lehnenprofil mittels mechanischer Bearbeitung geöffnet werden kann und diese Hohlkammer zur Anbindung des Lehnenprofils verwendet werden kann.

In weiterer Ausgestaltung der Erfindung empfiehlt es sich, das Sitzprofil und das Lehnenprofil mit einer gepolsterten Sitz- bzw. Lehnenauflage auszustatten, sodass noch höhere Komfortansprüche erfüllt werden. Dabei können alle im Fahrzeugbau üblichen bzw. zugelassenen Materialien zum Einsatz kommen.

Eine Ausführungsform eines Lehnenprofils sieht vor, das Lehnenprofil aus einem Metallverbundwerkstoff auszuführen, wobei das Lehnenprofil in einen Verbindungsteil, welcher die mechanische Verbindung mit dem Sitzprofil herstellt und in einen Lehnenteil, welcher die Sitzlehne bildet geteilt ist. Dabei wird der Verbindungsteil aus Metall ausgeführt und der Lehnenteil kann aus beliebigen geeigneten Materialen (Z.B. Holz, Kunststoff, oder ein weiteres Metall) ausgeführt. Dadurch ist es möglich, die Verbindung mit dem Sitzprofil mit sehr hoher mechanischer Festigkeit auszuführen und den Lehnenteil bequem und optisch ansprechend gestalten zu können.

Die Befestigung des Sitzprofils an dem Fahrzeug erfolgt mittels mindestens einer Anbindungslinie, welche die Befestigung an geeigneten Bauteilen des Fahrzeugs ermöglicht. Dabei kann diese Anbindungslinie beispielsweise mittels einer Nut zur Aufnahme von Nutensteinen oder durch eine Mehrzahl von mit Gewinden ausgestatteten Bohrungen ausgeführt werden.

Zur weiteren Erhöhung der Stabilität eines erfindungsgemäßen Passagiersitzes ist es vorteilhaft eine Stützkonstruktion in Form einer Konsole vorzusehen, welche die Gewichtsbelastung des Sitzes an dem Fußboden, oder der Seitenwand des Fahrzeugs abstützt. Dabei ist es besonders empfehlenswert, diese Konsole in Form eines geschlossenen Hohlprofils mit innen liegenden Längsverstärkungen auszuführen, da solcherart eine Stützkonstruktion mittels einfachen Ablängens eines Profil hergestellt werden kann und weitere Fertigungsschritte (wie. schweißen) entfallen können.

Es ist vorteilhaft, das Sitzprofil und gegebenenfalls auch das Lehnenprofil und das Konsolenprofil an den Stirnseiten abzudecken, sodass die Hohlräume für den Passagier nicht sichtbar sind und auch keine Gegenstände (Z.B. Müll) in diese Hohlräume eingebracht werden können.

In weiterer Ausgestaltung der Erfindung ist der Passagiersitz so ausgeführt, dass eine Anbindung von Haltestangen an das Sitzprofil oder das Lehnenprofil vorgesehen ist.

Typischerweise werden das Sitzprofil, das Konsolenprofil und das Lehnenprofil aus Leichtmetall hergestellt, da Leichtmetall sich sehr gut dafür eignet, mittels Strangpressen in den erforderlichen Querschnitten geformt zu werden.

Dabei ist es besonders vorteilhaft, Aluminiumlegierungen einzusetzen, da diese bei geringem Gewicht eine hohe Festigkeit aufweisen sowie einfach zu rezyklieren sind. Durch den Einsatz von Leichtmetall können weiters alle Maßnahmen zum Brandschutz bzw. die erforderlichen Brandschutztests von Sitzen entfallen.

Die Oberflächen aller beschriebenen Profile können beliebig Oberflächenbehandelt werden, wobei eine Pulverbeschichtung vorteilhaft ist. Mittels Pulverbeschichtung ist eine Oberfläche erzielbar, welche optisch ansprechend und dabei verschleißresistent ist.

Ein erfindungsgemäßes Passagiersitzsystem umfasst ein Sitzprofil und geeignete Befestigungsmittel für die Befestigung an tragenden Teilen eines Fahrzeugs. Optional umfasst das Passagiersitzsystem ein Lehnenprofil und ein Konsolenprofil mit zugehörigen Befestigungsmitteln.

Der wesentliche Vorteil eines erfindungsgemäßen Passgiersitzes bzw. eines Passagiersitzsystems besteht darin, dass dadurch Sitze in allen erforderlichen Einbausituationen und benötigten Sitz/Sitzbanklängen mittels einfachen Ablängens eines Sitzprofils hergestellt werden können. Alle Passagiersitze eines Fahrzeugs können aus demselben Profil bestehen, wobei sich ausschließlich Unterschiede in der Art der Befestigung bei unterschiedlicher Sitzanordnung (Längs-oder Quersitze) ergeben.

Gegenständliche Erfindung eignet sich für alle Arten von Passagiersitzen von Land- Wasser- und Luftfahrzeugen.

### Kurzbeschreibung der Zeichnungen

Es zeigen beispielhaft:
**Fig.1** einen Passagiersitz.
**Fig.2** einen Passagiersitz mit Lehne.
**Fig.3** einen gepolsterten Passagiersitz mit Lehne.
**Fig.4** einen Passagiersitz mit Lehne und Konsole.
**Fig.5** einen Passagiersitz mit Lehne und Konsole - Schrägansicht

### Ausführung der Erfindung

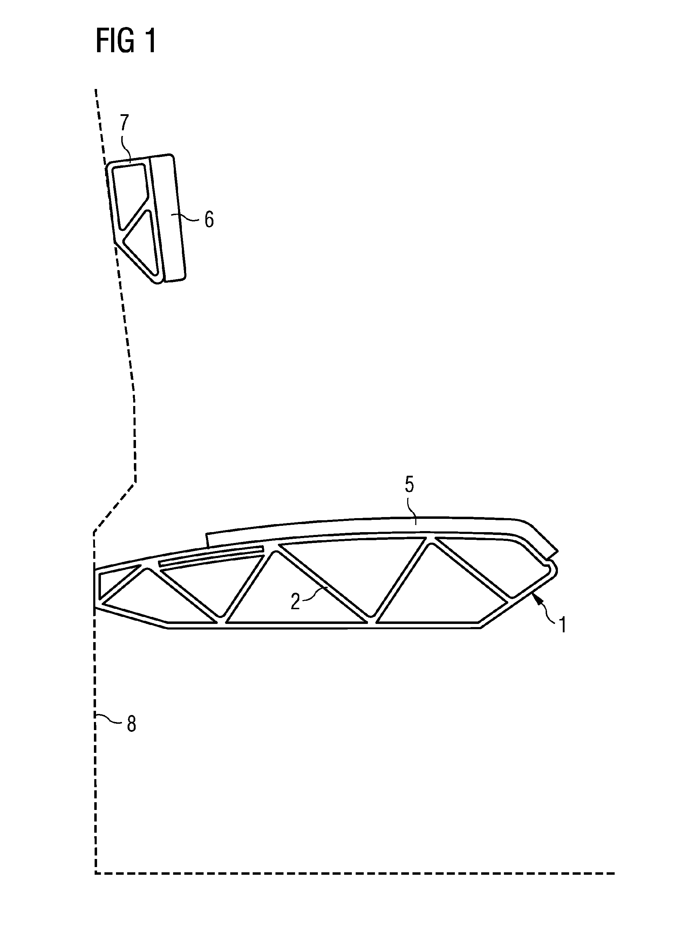

**Fig.1** zeigt beispielhaft und schematisch einen Passagiersitz. Es ist ein Querschnitt eines Passagiersitzes dargestellt. Ein Passagiersitz umfasst ein einstückiges Sitzprofil 1, welches mittels mehrerer Stege 2 in im Wesentlichen dreieckförmige Abschnitte geteilt ist. Ein solches Profil ermöglicht es, einen sehr stabilen Sitz bei geringem Gewicht aufzubauen. Das Sitzprofil 1 ist über eine Anbindungslinie mit tragenden Teilen des Fahrzeugs verbunden. Zur Verdeutlichung der Einbaulage ist die Wageninnenkontur 8 dargestellt. Fig. 1 stellt das Grundprinzip des erfindungsgemäßen Passagiersitzes dar. Das Sitzprofil 1 ist unmittelbar als Sitzfläche benutzbar, es stellt sowohl den tragenden Teil des Passagiersitzes als auch die designerisch zu gestaltende Oberfläche dar. Somit kann ein optisch ansprechender und sehr stabiler Passagiersitz mit geringstem Material- und Konstruktionsaufwand aufgebaut werden. Fig.1 stellt auch eine Weiterbildung der Erfindung dar, da die Sitzfläche eine Sitzpolsterung 5 aufweist. Ebenso sind eine Lehnenpolsterung 6 und ein Stützprofil 7 vorgesehen, welche an dem Fahrzeuginneren unmittelbar angebracht sind. Zur Vereinfachung sind in Fig.1 alle Befestigungsmittel, die der Befestigung des Sitzprofils 1 mit den tragenden Teilen des Fahrzeugs dienen nicht dargestellt. Jedenfalls sind Befestigungsmittel an der Rückseite oder Unterseite (Anbindungslinie) des Sitzprofils 1 (an der Kontaktstelle mit der Wageninnenkontur) vorzusehen. Weitere Befestigungsmittel werden je nach Einbausituation des Passagiersitzes (Quer-oder Längsbestuhlung, Anzahl an Sitzplätzen auf einem Sitzprofil 1) bestimmt. Eine, in den meisten Anwendungsfällen erforderliche Abstützung des Sitzprofils 1 an dem Fahrzeugfußboden oder der Fahrzeugseitenwand ist in dieser Prinzipdarstellung nicht gezeigt.

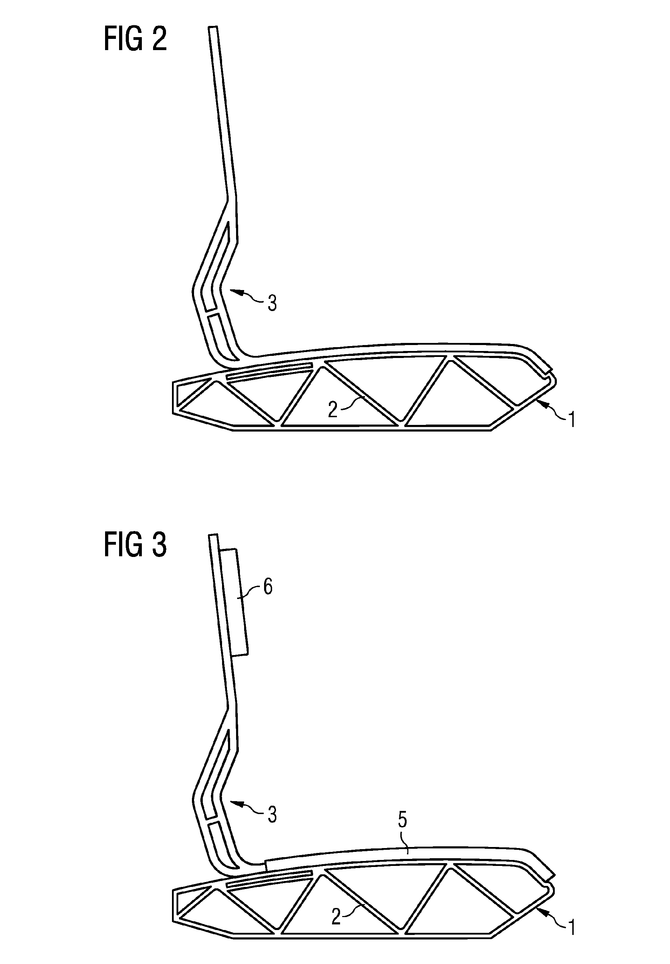

**Fig.2** zeigt beispielhaft und schematisch einen Passagiersitz mit Lehne. Es ist ein Passagiersitz mit einer Sitzlehne dargestellt. Ein Sitzprofil 1 ist mit einem Lehnenprofil 3 verbunden, wobei in dem in Fig.2 dargestellten Ausführungsbeispiel das Lehnenprofil 3 sowohl eine Sitzlehne als auch eine Sitzfläche umfasst. Diese Ausführungsform empfiehlt sich insbesondere für Ausführungen des Lehnenprofils 3 aus Metallverbundwerkstoff, da solcherart die Befestigung des Lehnenprofils 3 mit dem Sitzprofil 1 über eine stabile, metallische Nut-Feder Verbindung erfolgen kann und gleichzeitig auch höchste Ansprüche an die Materialqualität und Komfort der Sitz- und Lehnenflächen erzielt werden können. Dabei umfasst das Lehnenprofil 3 einen metallischen Teil, welcher der Anbindung an das Sitzprofil 1 dient und einen Sitzteil aus beliebigen weiteren Materialien.
**Fig.3** zeigt beispielhaft und schematisch einen gepolsterten Passagiersitz mit Lehne. Es ist ein Passagiersitz dargestellt, welcher zur weiteren Steigerung des Sitzkomforts eine Sitzpolsterung 5 und eine Lehnenpolsterung 6 umfasst. Die Grundstruktur entspricht im Wesentlichen dem in Fig.2 gezeigtem Ausführungsbeispiel, wobei jedoch das Lehnenprofil 3 sich vorzugsweise im Lehnenbereich erstreckt. Der Sitzflächenbereich ist mit einer Sitzpolsterung 5 ausgestattet, welche unmittelbar mit dem Sitzprofil 1 oder dem Lehnenprofil 3 verbunden ist.

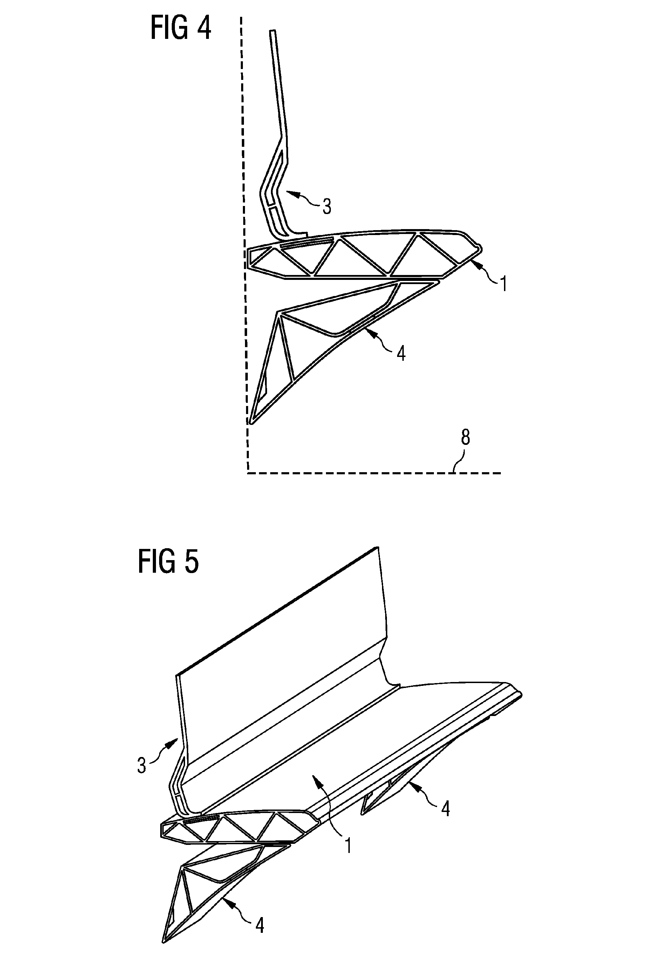

**Fig.4** zeigt beispielhaft und schematisch einen Passagiersitz mit Lehne und Konsole. Es ist Querschnitt durch einen Passagiersitz dargestellt, welcher ein Sitzprofil 1, ein Lehnenprofil 3 und ein Konsolenprofil 4 umfasst. Das Sitzprofil 1 und das Lehnenprofil 3 bilden einen Passagiersitz, welcher in diesem Ausführungsbeispiel nicht gepolstert ist. Die Oberfläche des Sitzprofils 1 ist als Sitzfläche ausgebildet. Es ist ein Konsolenprofil 4 vorgesehen, welches ebenso wie das Sitzprofil 1 einstückig ausgeführt ist. Das Konsolenprofil 4 ist mit dem Sitzprofil 1 und tragenden Teilen des Fahrzeugs verbunden und übermittelt einen Teil der vertikalen Kräfte auf diese tragenden Teile. Zur Verdeutlichung der Einbausituation ist beispielhaft eine Wageninnenkontur 8 dargestellt.
**Fig.5** zeigt beispielhaft und schematisch einen Passagiersitz mit Lehne und Konsolen in Schrägansicht. Es ist der Passagiersitz aus Fig.4 in Schrägansicht dargestellt. Der Passagiersitz umfasst in gezeigtem Beispiel mehrere Sitzplätze auf dem Sitzprofil 1. An jedem der beiden Enden des Sitzprofils 1 ist jeweils ein Konsolenprofil 4 vorgesehen. Das Konsolenprofil 4 kann je nach Einbausituation des Sitzes/ der Sitzbank unterschiedlich angeordnet sein.

### Liste der Bezeichnungen

- 1: Sitzprofil
- 2: Steg
- 3: Lehnenprofil
- 4: Konsolenprofil
- 5: Sitzpolsterung
- 6: Lehnenpolsterung
- 7: Stützenprofil
- 8: Wageninnenkontur

## Patentansprüche

1. Passagiersitz für ein Fahrzeug, umfassend ein einstückiges, geschlossenes Sitzprofil (1) mit innenliegenden längs verlaufenden Stegen (2) **dadurch gekennzeichnet, dass** eine Außenfläche des Profils als Sitzfläche ausgebildet ist und mindestens eine Sitzfläche je Passagiersitz vorgesehen ist.

2. Passagiersitz für ein Fahrzeug gemäß Anspruch 1, **dadurch gekennzeichnet, dass** das Sitzprofil (1) einen im Wesentlichen ovalen Querschnitt aufweist und durch die Stege (2) in im Wesentlichen dreieckförmige Kammern geteilt ist.

3. Passagiersitz für ein Fahrzeug gemäß Anspruch 1 oder 2, **dadurch gekennzeichnet, dass** das Sitzprofil (1) mindestens eine Anbindungslinie zur Aufnahme von Befestigungsmitteln aufweist.

4. Passagiersitz für ein Fahrzeug gemäß einem der vorgehenden Ansprüche, **dadurch gekennzeichnet, dass** ein Lehnenprofil (3) vorgesehen ist, welches über eine formschlüssige Verbindung mit dem Sitzprofil (1) verbindbar ist.

5. Passagiersitz für ein Fahrzeug gemäß einem der vorgehenden Ansprüche, **dadurch gekennzeichnet, dass** ein Konsolenprofil (4) vorgesehen ist, welches auf einer der Sitzfläche des Sitzprofils (1) abgewandten Seite des Sitzprofils (1) befestigt ist und die Belastungskräfte auf einen Fußboden oder eine Seitenwand des Fahrzeugs überträgt.

6. Passagiersitz für ein Fahrzeug gemäß einem der vorgehenden Ansprüche, **dadurch gekennzeichnet, dass** das Sitzprofil (1), das Lehnenprofil (3) und das Konsolenprofil (4) zumindest teilweise aus Leichtmetall gefertigt ist.

7. Passagiersitz für ein Fahrzeug gemäß Anspruch 6, **dadurch gekennzeichnet, dass** das die Profile (1,3,4) aus einer Aluminiumlegierung gefertigt sind.

8. Passagiersitz für ein Fahrzeug gemäß einem der vorgehenden Ansprüche, **dadurch gekennzeichnet, dass** der Passagiersitz in Längsrichtung des Fahrzeugs eingebaut ist.

9. Passagiersitz für ein Fahrzeug gemäß einem der Ansprüche 1 bis 7, **dadurch gekennzeichnet, dass** der Passagiersitz normal zur Längsrichtung des Fahrzeugs eingebaut ist.

10. Passagiersitzsystem, umfassend ein Sitzprofil (1) gemäß Anspruch 1, ein Lehnenprofil (3) gemäß Anspruch 4, ein Konsolenprofil (4) gemäß Anspruch 5
